(19) Europäisches Patentamt / European Patent Office / Office européen des brevets

(11) **EP 2 414 451 B1**

(12) **EUROPEAN PATENT SPECIFICATION**

(45) Date of publication and mention
of the grant of the patent:
**25.10.2017 Bulletin 2017/43**

(21) Application number: **10710010.9**

(22) Date of filing: **16.03.2010**

(51) Int Cl.:
*B29C 47/02* (2006.01)     *H01B 3/44* (2006.01)
*C08L 23/06* (2006.01)     *C08L 23/08* (2006.01)
*H01B 9/02* (2006.01)     *B29C 47/00* (2006.01)

(86) International application number:
**PCT/EP2010/053410**

(87) International publication number:
**WO 2010/112333 (07.10.2010 Gazette 2010/40)**

(54) **CABLE WITH HIGH LEVEL OF BREAKDOWN STRENGTH AFTER AGEING**

KABEL MIT HOHER DURCHBRUCHFESTIGKEIT NACH ALTERUNG

CÂBLE DOTÉ D'UN NIVEAU ÉLEVÉ DE RÉSISTANCE DISRUPTIVE APRÈS VIEILLISSEMENT

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **30.03.2009 EP 09156690**

(43) Date of publication of application:
**08.02.2012 Bulletin 2012/06**

(73) Proprietor: **Borealis AG**
**1220 Vienna (AT)**

(72) Inventors:
 • **SMEDBERG, Annika**
 **471 61 Myggenäs (SE)**
 • **JÄGER, Karl-Michael**
 **417 29 Göteborg (SE)**

(74) Representative: **Kador & Partner**
**Corneliusstraße 15**
**80469 München (DE)**

(56) References cited:
**EP-A- 0 520 752**     **EP-A- 1 605 473**
**EP-A- 1 630 823**     **EP-A- 1 916 672**
**WO-A-98/34236**

 • **DATABASE WPI Week 199016 Thomson
 Scientific, London, GB; AN 1990-119716
 XP002544057 & JP 2 069542 A (FUJIKURA CABLE
 WORKS) 8 March 1990 (1990-03-08)**
 • **DATABASE WPI Week 198904 Thomson
 Scientific, London, GB; AN 1989-027894
 XP002544068 FURUKAWA ELECTRIC: & JP 63
 301414 A 8 December 1988 (1988-12-08)**

**Description**

The invention concerns a cable comprising at least one semiconductive (semicon) layer and at least one insulation layer with a high level of breakdown strength after ageing. The invention is based on the interaction between the semiconductive layer and insulation layer. The present invention furthermore concerns a process for the production of such a cable and the use of the cable as a power cable.

In electric power cables, in particular for medium voltage (6 kV to 36 kV) and high voltage (> 36 kV), usually a metal conductor is surrounded by an inner semiconductive layer, an insulation layer, an outer semiconductive layer and auxiliary further layer(s) and a cable jacket. Today, the insulation and semiconductive layer(s) are usually made from polyethylene.

Predominantly, ethylene homo- and/or copolymers which are cross-linkable, e.g. by the addition of peroxide to the composition are used. Power cables comprising polymeric insulation and more semiconducting layers have the problem of reduced life-time when installed in an environment where the cable is exposed to water as e.g. in underground or high humidity locations compared to cables installed in dry environment. Reduced life-time has been attributed to the formation of so-called water trees which occur when an organic polymer material is subjected to an electric field over a longer period of time in the presence of water.

It is an object of the present invention to improve the ageing characteristics of the cable as described by increasing the level of breakdown strength after ageing.

The above-mentioned object is solved by a cable comprising a conductor surrounded by at least one semiconductive layer and at least one insulation layer, in any order, wherein

- the semiconductive layer consists of a composition (A) comprising a polar copolymer (a) and carbon black, and
- the insulation layer consists of a composition (B) comprising a polar copolymer (b2),

and wherein

- the absolute value of the difference of the melting temperature $T_m(a)$ of said polar copolymer (a) and the melting temperature $T_m(b2)$ of said polar copolymer (b2) is smaller than 25 °C,

wherein the polar copolymer (a) and the polar copolymer (b2) contain polar groups and wherein the composition (B) further comprises a low-polar polyolefin (b1), which contains polar groups or no polar groups, whereby the amount of polar groups, if present, in low-polar polyolefin (b1) is lower than the amount of polar groups present in the polar copolymers (a) and (b2), and
wherein the content of polar comonomer(s), expressed in millimoles (mmol) per gram copolymer, present in polar copolymer (a) ($C_{polar\ comonomer}(a)$) and in polar copolymer (b2) ($C_{polar\ comonomer}(b2)$) satisfies the relation:

$$- 15 \text{ mmol/g} < C_{polar\ comonomer}(a) - C_{polar\ comonomer}(b2) < 15 \text{ mmol/g}.$$

Electric power cables, especially those for medium and high voltage, typically comprise two semiconductive layers and one insulation layer.

Said cable comprises preferably a conductor surrounded by at least a semiconductive layer and an insulation layer, in that order. More preferably, the cable comprises a conductor surrounded by an inner semiconductive layer, insulation layer and optionally, and preferably, an outer semiconductive layer, in that order, wherein at least the inner semiconductive layer consists of the composition (A) as defined above.

It is evident for a skilled person that the cable can optionally comprise other layers e.g. layers conventionally used in of W&C field.

The term "conductor" means herein above and below that the conductor comprises one or more wires. Moreover, the cable may comprise one or more such conductors. The conductor is an electrical conductor.

The composition (B) comprises a low-polar polyolefin (b1) as further described below. The composition (A) may optionally comprise a low-polar polyolefin, which is preferably a low-polar polyolefin (b1) as further described below.

The polar copolymer (a) in composition (A) and the polar copolymer (b2) in composition (B) mean both herein a polymer which bears (= contains) polar groups. The low-polar polyolefin (b1) means herein a polyolefin which bears polar groups or a polyolefin which bears no polar groups.

The polar copolymer (a) and the polar copolymer (b2) contain, independently, a higher amount of polar groups than contained, if any, in the low-polar polyolefin (b1). Thus the polar copolymer (a) and the polar copolymer (b2) are more polar than the low-polar polyolefin (b1).

Polar groups may be incorporated to the polar copolymer (a), to the polar copolymer (b2) and, if polar groups are present, to the low-polar polyolefin (b1), e.g. by grafting or (co)polymerising compounds, which contain polar groups, to the polymer backbone, preferably by copolymerising, a monomer, which forms the backbone polymer, together with comonomer(s) containing said polar group(s).

As well known, the term "comonomer" refers to copolymerisable comonomer units.

The term "comonomer containing a polar group" is referred herein as a polar comonomer.

Where herein it is referred to a polymer or polyolefin, such as polyethylene, this is intended to mean both a homo- and copolymer, e.g. an ethylene homo- and copolymer.

Most preferably, the polar groups present in the polar copolymer (a), in the polar copolymer (b2), and if present, in the low-polar polyolefin (b1) originate from a polar comonomer.

The following embodiments of the polar copolymer are embodiments for both polar copolymer (a) and/or (b2), unless stated otherwise. Said embodiments and preferable properties and value ranges are general independent definitions which can be used for characterising further, independently, the preferable embodiments of for polar copolymer (a) and for polar copolymer (b2).

The polar copolymer can be any polar copolymer suitable for use in a semiconductive layer or, respectively, in an insulation layer, of a cable, preferably of a power cable. The polar copolymer can be e.g. a commercially available polar polymer or can be prepared according to or analogously to known polymerization process described in the chemical literature.

The polar copolymer is most preferably a copolymer containing at least polar comonomer(s). The polar copolymer may optionally contain further comonomer(s) such as non-polar comonomer(s) as described later below in relation to the low polar polyolefin (b1).

Preferably, the polar copolymer contains polar comonomer(s) in an amount of more than 500 micromoles per gram, preferably of more than 700 micromoles per gram, and more preferably of more than 800 micromoles per gram, of the polar copolymer.

Preferably, the polar copolymer has an amount of polar comonomer(s) of less than 6000, preferably less than 5000, more preferably less than 3500 micromoles per gram, most preferably less than 2800 micromoles per gram of the polar copolymer.

Preferably, as a polar comonomer, comonomers containing hydroxyl group(s), alkoxy group(s), ether group(s), carbonyl group(s), carboxyl group(s) or ester group(s), are used.

More preferably, comonomers containing carboxyl and/or ester group(s) are used, and still more preferably the comonomer is selected from the groups of acrylates and acetates. The acrylate type of polar comonomer is preferred over acetates due to their better resistance to thermal degradation at high temperature.

Still more preferably, the polar comonomer is selected from the group of alkyl acrylates, alkyl methacrylates, and vinyl acetate. Further preferred, the comonomers are selected from $C_1$- to $C_6$-alkyl acrylates, $C_1$- to $C_6$-alkyl methacrylates, and vinyl acetate. Still more preferably, the polar copolymer comprises a copolymer of ethylene with $C_1$- to $C_4$-alkyl, such as methyl, ethyl, propyl or butyl acrylates or vinyl acetate.

Preferably, the polar copolymer is prepared by copolymerising an olefin monomer together with at least one polar comonomer.

In a preferred embodiment, the olefin monomer is selected from ethylene or $C_3$-to $C_{20}$-alpha-olefins such as propylene, 1-butene, 4-methyl-1-pentene, 1-hexene, 1-octene or 1-nonene, or mixtures thereof. Even more preferred, the olefin monomer is ethylene.

The polar copolymer is preferably a polyethylene or polypropylene copolymer.

The polar copolymer is preferably a polyethylene copolymer. The polyethylene copolymer is obtainable by polymerising ethylene together with polar comonomer(s) and optionally with further comonomer(s), such as non-polar comonomer(s), as defined below in relation to low-polar polyolefin (b1).

The polyethylene copolymer as said polar copolymer preferably has a melt flow rate $MFR_2$ (measured at a load of 2.16 kg and a temperature of 190 °C) in the range of 0.5 to 70 g/10 min, more preferably 1 to 55 g/10 min, even more preferably 1.5 to 40 g/10 min.

Preferably, the density of the polyethylene copolymer as said polar copolymer is higher than 0.860 g/cm$^3$. Preferably the density of the ethylene homo- or copolymer is not higher than 0.960 g/cm$^3$.

Still further, it is preferred that the polyethylene copolymer as said polar copolymer is a polyethylene copolymer which has been produced in a high pressure (HP) process using free radical polymerization by polymerising ethylene with polar comonomer(s) and optionally with further comonomer(s), such as non-polar comonomer(s), as defined below in relation to low-polar polyolefin (b1), in the presence of one or more initiator(s) resulting in low density polyethylene copolymer (polar LDPE copolymer). The polymerization generally is performed at pressures of 100 to 400 MPa and at temperatures of 80 to 350 °C. Such process are well known and well documented in the literature.

Optionally, the polar copolymer, preferably the polar LDPE copolymer, as defined above, may further be unsaturated, i.e. the polar copolymer, as defined above, may optionally comprise carbon-carbon double bonds. In such case the polar copolymer is referred herein as an unsaturated polar copolymer. The "unsaturated" polar copolymer means herein that the polar copolymer contains carbon-carbon double bonds/1000 carbon atoms in a total amount of at least 0.2/1000 carbon atoms. The upper limit of the amount of carbon-carbon double bonds present in the polar polyolefin is not limited and may preferably be less than 5.0/1000 carbon atoms, preferably less than 3.0/1000 carbon atoms.

In case of polar copolymer having the amount of polar comonomer(s) of higher than 0.4 wt%, the total amount of carbon-carbon double bonds means the total sum of vinyl and vinylidene present in the unsaturated polar copolymer and measured as described in method d) under Methods and Examples part using the wavelengths given therein. If the polar comonomer content is 0.4 wt% or less, then the total amount of carbon-carbon double bonds means preferably the total sum of the carbon-carbon double bonds present in the unsaturated polar copolymer and originating from vinyl groups, vinylidene groups and *trans*-vinylene groups, and measured as described in method d) under Methods and Examples part using the wavelengths given therein. If the polar copolymer is unsaturated, then it is preferably an unsaturated polar LDPE copolymer.

In case of an unsaturated polar copolymer, which is then preferably the unsaturated polar LDPE copolymer, the double bonds can be provided e.g. by any means including one or more of the following means: polymerisation process, polyunsaturated comonomer(s), or double bonds introducing chain transfer agent(s) (CTAs), such as propylene, as known in the art.

It is well known that e.g. propylene can be used as a comonomer or as a chain transfer agent (CTA), or both, whereby it can contribute to the total amount of the C-C double bonds, preferably to the total amount of the vinyl groups. Herein, when a compound which can also act as comonomer, such as propylene, is used as CTA for providing double bonds, then said copolymerisable comonomer is not calculated to the comonomer content.

The polyunsaturated comonomers suitable for the unsaturated polar copolymer preferably consist of a straight carbon chain with at least 8 carbon atoms and at least 4 carbons between the non-conjugated double bonds, of which at least one is terminal, more preferably, said polyunsaturated comonomer is a diene, preferably a diene which comprises at least eight carbon atoms, the first carbon-carbon double bond being terminal and the second carbon-carbon double bond being non-conjugated to the first one.

Preferred dienes are selected from $C_8$- to $C_{14}$-non-conjugated dienes or mixtures thereof, more preferably selected from 1,7-octadiene, 1,9-decadiene, 1,11-dodecadiene, 1,13-tetradecadiene, 7-methyl-1,6-octadiene, 9-methyl-1,8-decadiene, or mixtures thereof. Even more preferably, the diene is selected from 1,7-octadiene, 1,9-decadiene, 1,11-dodecadiene, 1,13-tetradecadiene, or any mixture thereof, however, without limiting to above dienes.

Siloxanes having the following formula:

$$CH_2=CH-[Si(CH_3)_2-O]_n-Si(CH_3)_2-CH=CH_2,$$

wherein n=1 or higher can also be used as a polyunsaturated comonomer. As an example, divinylsiloxanes can be mentioned.

Preferably, polar copolymer includes up to 4 wt.-% dienes.

The melting temperature of the polar copolymer (a), preferably the optionally unsaturated polar LDPE copolymer, of the semiconductive composition (A) preferably is above 70 °C, more preferably above 80 °C and most preferably is 90 °C or higher.

The melting temperature of the polar copolymer (a), preferably the optionally unsaturated polar LDPE copolymer, furthermore is preferably below 125 °C, more preferably below 120 °C, more preferably below 115 °C, and most preferably 110 °C or lower.

Furthermore, the melting temperature of the polar copolymer (b2), preferably the optionally unsaturated polar LDPE copolymer, of the insulation composition (B) preferably is above 70 °C, more preferably above 80 °C and most preferably is 90 °C or higher.

The melting temperature of the polar copolymer (b2), preferably the optionally unsaturated polar LDPE copolymer, furthermore is preferably below 125 °C, more preferably below 120 °C, more preferably below 115 °C, and most preferably is 110 °C or lower.

The absolute value of the difference of the melting temperature $T_m(a)$ of said polar copolymer (a), preferably the optionally unsaturated polar LDPE copolymer, and the melting temperature $T_m(b2)$ of said polar copolymer (b2), preferably the optionally unsaturated polar LDPE copolymer, is smaller than 25 °C, more preferably smaller than 20 °C, more preferably smaller than 15 °C.

It is preferred that both the polar copolymer (a) in the semiconductive material and polar copolymer (b2) in the insulation comprise at least one identical type of polar comonomer. This includes the situation that polar copolymer (a) and polar copolymer (b2) comprise more than one type of polar comonomer, whereby at least one type of the comonomer present in copolymers (a) and (b2) is identical. In a preferred embodiment, polar copolymer (a) and polar copolymer (b2) are identical as regards the type(s) of comonomer(s) contained therein, i.e. polar copolymer (a) and polar copolymer (b2) comprise the same type(s) of polar comonomer.

Furthermore, it is preferred that polar copolymer (a) and polar copolymer (b2) comprise only one type of polar comonomer, and it is, hence, particularly preferred that copolymer (a) and copolymer (b2) comprise one type of polar comonomer which is the same type.

In a preferred embodiment, polar copolymer (a) and polar copolymer (b2) have a content of polar comonomer which is similar.

The content of polar comonomer(s) in polar copolymer (a) ($C_{polar\ comonomer}$(a)), and the content of polar comonomer(s) in polar copolymer (b2) ($C_{polar\ comonomer}$(b2)), satisfies the relation:

$$- 15\ \mathrm{mmol/g} < C_{polar\ comonomer}(a) - C_{polar\ comonomer}(b2) < 15\ \mathrm{mmol/g}$$

whereby the content of polar comonomer(s) in the polar copolymer $C_{polar\ comonomer}$ (a) and in the polar copolymer $C_{polar}$ comonomer (b2) is expressed in mmol/(g polar copolymer) and determined as described below under "b) Comonomer content of polar comonomers".

More preferably, the content of polar comonomer(s) in polar copolymer (a) ($C_{polar\ comonomer}$(a)), and the content of polar comonomer(s) in polar copolymer (b2) ($C_{polar\ comonomer}$(b2)), satisfies the relation:

$$- 5\ \mathrm{mmol/g} < C_{polar\ comonomer}(a) - C_{polar\ comonomer}(b2) < 5\ \mathrm{mmol/g},$$

and most preferably, the content of polar comonomer(s) in polar copolymer (a) ($C_{polar\ comonomer}$(a)), and the content of polar comonomer(s) in polar copolymer (b2) ($C_{polar\ comonomer}$(b2)), satisfies the relation:

$$- 2\ \mathrm{mmol/g} < C_{polar\ comonomer}(a) - C_{polar\ comonomer}(b2) < 2\ \mathrm{mmol/g}.$$

According to a preferred embodiment of the present invention, the semiconductive layer comprising the polar copolymer (a) represents at least the inner semiconductive.

According to the present invention, the composition (A) used for producing the semiconductive layer comprises carbon black.

The semiconductive properties result from the carbon black added to the polar copolymer. Thus, the amount of carbon black is at least such that a semiconducting composition is obtained. Depending on the desired use, the conductivity of the carbon black and conductivity of the composition, the amount of carbon black can vary.

Preferably, the polymer composition comprises 10 to 50 wt.% carbon black, based on the weight of the semiconductive composition (A).

In other embodiments, the lower limit of the amount of carbon black is 10 wt.-%, preferably 20 wt.-%, more preferably 25 wt.-%, based on the weight of the semiconductive composition (A).

The upper limit of the amount of carbon black is preferably 50 wt.-%, preferably 45 wt.-%, more preferably 41 wt%, based on the weight of the semiconductive composition (A).

Any carbon black which is electrically conductive can be used. Examples of suitable carbon blacks include furnace blacks and acetylene blacks.

Particularly suitable furnace blacks may have a primary particle size of 28 nm or less. The mean primary particle size is defined as the number average particle diameter measured according to ASTM D3849-95a. Particularly suitable furnace blacks of this category preferably have an iodine number between 60 and 300 mg/g according to ASTM D1510. It is further preferred that the oil absorption number (of this category) is between 50 and 225 ml/100g, preferably between 50 and 200 ml/100g and this is measured according to ASTM D2414.

Particularly suitable furnace blacks also may have a primary particle size of greater than 28 nm. The mean primary particle size is defined as the number average particle diameter according to ASTM D3849-95a. Particularly suitable furnace blacks of this category preferably have an iodine number between 30 and 200 mg/g according to ASTM D1510. It is further preferred that the oil absorption number (of this category) is between 80 and 300 ml/100 g measured according to ASTM D2414.

Other suitable carbon blacks can be made by any other process or can be further treated.

Suitable carbon blacks for semiconductive cable layers are preferably characterized by their cleanliness. Therefore, preferred carbon blacks have an ash-content of less than 0.2 wt-% measured according to ASTM D1506, a 325 mesh sieve residue of less than 30 ppm according to ASTM D1514 and have less than 1 wt-% total sulphur according to ASTM D1619.

Most preferred are extra-clean carbon blacks having an ash-content of less than 0.05 wt-% measured according to ASTM D1506, a 325 mesh sieve residue of less than 15 ppm according to ASTM D1514 and have less than 0.2 wt-%, preferably less than 0.1 wt-% total sulphur according to ASTM D1619.

Furnace carbon black is generally acknowledged term for the well known carbon black type that is produced in a furnace-type reactor. As examples of carbon blacks, the preparation process thereof and the reactors, reference can be made to i.a. EP629222 of Cabot, US 4,391,789, US 3, 922,335 and US 3,401,020. Furnace carbon black is distinguished herein from acetylene carbon black which produced by reaction of acetylene and unsaturated hydrocarbons, e.g. as described in US 4,340,577. As an example of commercial furnace carbon black grades described in ASTM D 1765-98b i.a. N351, N293 and N550, can be mentioned.

Particularly suitable acetylene blacks may have a particle size of larger than 29 nm, more preferably 29 to 80 nm. The mean primary particle size is defined as the number average particle diameter according to the ASTM D3849-95a.

Particularly suitable acetylene blacks of this category have an iodine number between 30 to 300 mg/g, more preferably 30 to 150 mg/g according to ASTM D1510. It is further preferred that the oil absorption number (of this category) is between 80 to 300 ml/100 g, more preferably 100 to 280 ml/100 g and this is measured according to ASTM D2414. Acetylene black is a generally acknowledged term and are very well known and e.g. supplied by Denka. They are produced in an acetylene black process.

Preferably, the semiconductive composition (A) has a volume resistivity, measured at 90 °C, of less than 500,000 Ohm cm, more preferably less than 100,000 Ohm cm, even more preferably less than 50,000 Ohm cm. Volume resistivity is in a reciprocal relationship to electrical conductivity, i.e. the lower the resistivity, the higher is the conductivity.

As mentioned above the composition (B) further comprises a low-polar polyolefin (b1). The low-polar polyolefin (b1), as also stated above, may contain polar groups or contains no polar groups, If polar groups are present, then the amount of polar groups present in low-polar polyolefin (b1) is lower than the amount of polar groups present in polar copolymers (a) and (b2). Furthermore preferably, the polar groups originate from polar comonomers present in the low-polar polyolefin (b1), as described above,

If the low-polar polyolefin (b1) contains polar comonomer(s), then the amount of polar comonomer(s) is preferably of less than 150 micromoles, more preferably of less than 125 micromoles, even more preferably of less than 100 micromoles, even more preferably of less than 85 micromoles, and most preferably of less than 70 micromoles, per gram of low-polar polyolefin (b1).

The low-polar polyolefin (b1) can be any polyolefin which is suitable as a polymer in an insulating layer of an electrical cable, preferably a power cable.

The low-polar polyolefin (b1) can be e.g. a commercially available polymer or can be prepared according to or analogously to known polymerization process described in the chemical literature.

In one preferred embodiment, the low-polar polyolefin (b1) comprises monomer units derived from $C_2$- to $C_{20}$-olefin comonomer(s), optionally in combination with polar comonomer(s).

The low-polar polyolefin (b1) preferably consists of one polymer which may contain one or more polymer components, i.e. can be unimodal or multimodal, e.g. bimodal, with respect to molecular weight distribution (MWD) and/or comonomer distribution.

The low-polar polyolefin (b1) may be homopolymer or copolymer which contains one or more comonomer(s).

The low-polar polyolefin (b1) is preferably a polyethylene or polypropylene polymer.

The comonomers are preferably selected from polar and non-polar comonomers or from mixtures thereof. The polar comonomer preferably contains hydroxyl group(s), alkoxy group(s), carbonyl group(s), carboxyl group(s), ether group(s) or ester group(s), or any mixture thereof.

The non-polar comonomer is another comonomer than the polar comonomer and preferably is avoid (i.e. does not contain) hydroxyl group(s), alkoxy group(s), carbonyl group(s), carboxyl group(s), ether group(s) or ester group(s).

When the low-polar polyolefin (b1) is a polypropylene, this may be a propylene homo- or copolymer and/or a heterophasic polypropylene. Said different types of polypropylene and their preparation process, e.g. low pressure process, are well known and documented in the polymer literature.

Furthermore, where the low-polar polyolefin (b1) is a polypropylene, it is preferred that it has an $MFR_2$ (230°C, 2.16 kg) of from 0.001 to 25 g/10min.

The low-polar polyolefin (b1) is preferably a polyethylene homopolymer and/or polyethylene copolymer.

The polyethylene polymer as said preferred low-polar polyolefin (b1) may be produced in a high pressure process or in a low pressure process.

The high pressure process is typically carried out by radical polymerization of ethylene in the presence of one or more initiator(s) and optionally one or more comonomer(s).

The low pressure process is typically carried out by polymerizing ethylene in the presence of a coordination catalyst system, e.g. using any type of supported and non-supported polymerisation catalyst. As an example, multi-site including dual site and single site catalyst systems such as Ziegler-Natta, chromium, metallocenes of transition metal compounds, non-metallocenes of late transition metals, said transition and late transition metal compounds belonging to group 3-10 of the periodic table (IUPAC 1989). Single-site catalysts are, for example, described in EP 688 794, EP 949 274, WO 95/12622 and WO 00/34341.

The coordination polymerisation processes and the mentioned catalysts are well-known in the field and may be commercially available or produced according to known literature.

In a preferred embodiment, the low-polar polyolefin (b1) comprises, or consists of, an olefin homopolymer, preferably an ethylene homopolymer i.e. obtainable by polymerising ethylene monomer units without adding any further monomer which is intended to act as a comonomer to produce a copolymer, i.e. monomers as impurities and for use as CTA are excluded.

In another equally preferred embodiment, the low-polar polyolefin (b1) comprises, or consists of, a copolymer of ethylene which has been made by polymerisation of ethylene and one or more comonomers which are copolymerisable with ethylene to produce a low polar copolymer. Thus low-polar homopolymers and copolymers are equally preferred.

In the preferred embodiments where the low-polar polyolefin (b1) is a ethylene homopolymer and/or polyethylene copolymer, the polyethylene contains at least 60 wt.-%, more preferably at least 70 wt.-%, still more preferably at least 80 wt.-% and most preferably at least 90 wt-% ethylene monomer units.

The ethylene copolymer as said low-polar polyolefin (b1) may comprise one or more comonomers, preferably one or more comonomer(s) selected from polar comonomer(s), non-polar comonomers(s) or a mixture of polar comonomer(s) and non-polar comonomer(s).

Preferably, the density of the ethylene homo or- copolymer as said low-polar polyolefin (b1) is higher than 0.860 g/cm$^3$. Furthermore, preferably the density of the ethylene homo or- copolymer as said low-polar polyolefin (b1) is not higher than 0.960 g/cm$^3$.

The $MFR_2$ (2.16 kg, 190 °C) of the ethylene homo or- copolymer as said low-polar polyolefin (b1) is preferably from 0.01 to 50 g/10min, more preferably is from 0.1 to 20 g/10min, still more preferably is from 0.2 to 15 g/10min, and most preferably is from 0.2 to 10 g/10 min.

Still further, it is preferred that the low-polar polyolefin (b1) is a low-polar polyethylene, more preferably a low-polar polyethylene which has been produced in a high pressure (HP) process using free radical polymerization resulting in low density polyethylene (LDPE). The polymerization generally is performed at pressures of 100 to 400 MPa and at temperatures of 80 to 350 °C. Such process are well known and well documented in the literature.

The LDPE as said low-polar polyolefin (b1) may be a low-polar low density ethylene homopolymer (referred herein as low-polar LDPE homopolymer) or a low-polar copolymer of low density ethylene (referred herein as low-polar LDPE copolymer). The low-polar LDPE copolymer may contain one or more comonomers which are preferably selected from the polar comonomer(s), non-polar comonomer(s) or from a mixture of the polar comonomer(s) and non-polar comonomer(s), as defined above or below, or from a mixture thereof. Moreover, said low-polar LDPE homopolymer or low-polar LDPE copolymer as said low-polar polyolefin (b1) may optionally be unsaturated.

As a polar comonomer for the low-polar LDPE copolymer as said low-polar polyolefin (b1), comonomer(s) containing hydroxyl group(s), alkoxy group(s), carbonyl group(s), carboxyl group(s), ether group(s) or ester group(s), or a mixture thereof, can used. More preferably, comonomer(s) containing carboxyl and/or ester group(s) are used as said polar comonomer. Still more preferably, the polar comonomer(s) of low-polar LDPE copolymer is selected from the groups of acrylate(s), methacrylate(s) or acetate(s), or any mixtures thereof.

If present in said low-polar LDPE copolymer, the polar comonomer(s) is preferably selected from the group of alkyl acrylates, alkyl methacrylates or vinyl acetate, or a mixture thereof.

Further preferably, said polar comonomers are selected from $C_1$- to $C_6$-alkyl acrylates, $C_1$- to $C_6$-alkyl methacrylates or vinyl acetate. Still more preferably, said low polar LDPE copolymer is a copolymer of ethylene with $C_1$- to $C_4$-alkyl acrylate, such as methyl, ethyl, propyl or butyl acrylate, or vinyl acetate, or any mixture thereof.

As the non-polar comonomer(s) for the low-polar LDPE copolymer used as said low-polar polyolefin (b1), comonomers other than the above defined polar comonomers are used. Preferably, the non-polar comonomers are other than comonomer(s) containing hydroxyl group(s), alkoxy group(s), carbonyl group(s), carboxyl group(s), ether group(s) or ester group(s).

Preferred non-polar comonomers are selected from the group comprising, preferably consisting of, monounsaturated (= one double bond) comonomer(s), preferably olefins, preferably alpha-olefins, more preferably $C_3$- to $C_{10}$-alpha-olefins, such as propylene, 1-butene, 1-hexene, 4-methyl-1-pentene, styrene, 1-octene, 1-nonene; polyunsaturated (= more than one double bond) comonomer(s); or any mixtures thereof. Polyunsaturated comonomer(s) are further described below in relation to unsaturated low-polar LDPE copolymers suitable for the unsaturated low-polar polyolefin (b1).

If the low-polar LDPE is a copolymer, it is preferred that it includes in total 0.001 to 50 wt.-%, more preferably 0.01 to 40 wt.-%, still more preferably less than 35 wt.-%, still more preferably less than 30 wt.-%, more preferably less than 25 wt.-%, of one or more comonomers.

Low-polar polyolefin (b1) is preferably LDPE homopolymer or LDPE copolymer, both are equally preferred options.

Optionally, as mentioned above, the low-polar polyolefin (b1), preferably the low-polar LDPE homo- or copolymer, as defined above may further be unsaturated, i.e. may optionally comprise carbon-carbon double bonds. In such case the low-polar polyolefin (b1) is referred herein as an unsaturated low-polar LDPE homopolymer of unsaturated low-polar LDPE copolymer. The "unsaturated" low-polar polyolefin (b1) means herein that the low-polar polyolefin (b1) contains carbon-carbon double bonds/1000 carbon atoms in a total amount of at least 0.4/1000 carbon atoms. If unsaturated, then the low-polar polyolefin (b1) is preferably an unsaturated low-polar polyethylene, more preferably an unsaturated low-polar LDPE, even more preferably an unsaturated low-polar LDPE homopolymer or an unsaturated low-polar LDPE copolymer. When polyunsaturated comonomer(s) are present in the low-polar LDPE polymer as said unsaturated low-polar polyolefin (b1), then the low-polar LDPE is referred as an unsaturated low-polar LDPE copolymer.

If the low-polar polyolefin (b1) is an unsaturated low-polar polyolefin, then it is preferably an unsaturated polyethylene, which has preferably a total amount of carbon-carbon double bonds/1000 carbon atoms of more than 0.4/1000 carbon atoms. The upper limit of the amount of carbon-carbon double bonds present in the low-polar polyolefin is not limited and may preferably be less than 5.0/1000 carbon atoms, preferably less than 3.0/1000 carbon atoms.

In case of unsaturated low-polar polyolefin having a polar comonomer content of higher than 0.4 wt%, then the total amount of carbon-carbon double bonds means the total sum of vinyl and vinylidene present in the unsaturated low-polar polyolefin and measured as described in method d) under Methods and Examples part using the wavelengths given therein. If the polar comonomer content is 0.4 wt% or less, then the term 'total amount of carbon-carbon double bonds' present in the unsaturated low-polar polyolefin, which is preferably an unsaturated low-polar LDPE homo- or copolymer, means preferably the total sum of the carbon-carbon double bonds present in the unsaturated low-polar polyolefin and originating from vinyl groups, vinylidene groups and *trans*-vinylene groups, and measured as described in method d) under Methods and Examples part using the wavelengths given therein. The total amount of vinyl groups is preferably higher than 0.05/1000 carbon atoms, still more preferably higher than 0.08/1000 carbon atoms, and most preferably higher than 0.11/1000 carbon atoms. Preferably the total amount of vinyl groups is lower than 4.0/1000 carbon atoms.

If the low-polar polyolefin (b1) is an unsaturated low-polar LDPE homopolymer, then the double bonds can be provided e.g. by polymerisation process and/or by polymerising ethylene in the presence of one or more chain transfer agents (CTAs) as defined above for polar polymer, such as propylene, as known in the art. If the low-polar polyolefin (b1) is a low-polar LDPE copolymer, then the double bonds can be provided by any means e.g. 1) by copolymerising ethylene with at least one polyunsaturated comonomer, optionally together with one or more other comonomer(s), and optionally in the presence of one or more chain transfer agents (CTAs), such as propylene; or 2) by copolymerising ethylene together with at least one monounsaturated comonomer as defined above in the presence of said CTA(s), such as propylene.

The polyunsaturated comonomer(s) suitable for the unsaturated low-polar polyolefin (b1) are preferably as defined above for polar copolymer.

Preferably, low-polar polyolefin (b1) includes up to 4 wt.-% dienes.

If low-polar polyolefin (b1) is unsaturated, then the source of unsaturation is not critical and can be provided e.g. by one or more of the following means, namely by a polymerisation process, CTA(s) or by copolymerising monomer, preferably ethylene, with at least one polyunsaturated comonomer.

In general, the unsaturation, if present in any of composition (A) and/or composition (B), can be provided to such composition i.a. by means of 1) an unsaturated polar copolymer, i.e. an unsaturated polar copolymer (a) and/or, respectively, an unsaturated polar copolymer (b2), 2) an unsaturated low-polar polyolefin, such as an unsaturated low-polar polyolefin (b1), 3) a low molecular weight (Mw) compound(s), such as crosslinking booster or scorch retarder additive(s), or 4) any combinations thereof, preferably at least by means of 1) and/or 2). If more than two of the above sources of double bonds are used in any of the composition (A) or, respectively, composition (B), then the total amount of double bonds in that composition is preferably the sum of the double bonds originating from the more than two sources. If the composition (A) or, respectively, composition (B), contain double bonds originating from the polymer source 1) and/or 2) and from the low molecular weight compound source 3), then the upper limit of the total amount of carbon-carbon double bonds, if present in the composition (A) or, respectively composition (B), is not limited and may then preferably be less than 5.0/1000 carbon atoms, preferably less than 3.0/1000 carbon atoms. When defining the double bond content from a compostion (A), or respectively composition (B), then most preferably the total amount of the double bonds, if present, in the composition (A) or, respectively in the composition (B), means the total sum of vinyl and vinylidene present in the composition, when the polar comonomer content of the composition is higher than 0.4wt%, or means the total sum of the vinyl groups, vinylidene groups and *trans*-vinylene groups present in the composition, when the polar comonomer content of the composition is less than 0.4wt%, as measured according to the description given in method d) under Methods and Examples part using the wavelengths given therein. In this most preferred case of defining the double bond content from the composition, the upper limit of the amount of carbon-carbon double bonds present in the low-polar polyolefin is not limited and may preferably be less than 5.0/1000 carbon atoms, preferably less than 3.0/1000 carbon atoms.

The low-polar polyolefin (b1), preferably the optionally unsaturated low-polar LDPE homopolymer or the optionally unsaturated low-polar LDPE copolymer, has preferably a melting temperature of higher than 80 °C, more preferably higher than 90 °C and most preferably of higher than 100 °C.

Preferably, the melting temperature of the low-polar polyolefin (b1), preferably of the optionally unsaturated low-polar LDPE homopolymer or the optionally unsaturated low-polar LDPE copolymer, is less than 135 °C, more preferably less than 130 °C, still more preferably less than 125 °C, still more preferably less than 120 °C, and most preferably less than 115 °C.

The low-polar polyolefin (b1) is preferably present in an amount of more than 30 wt%, preferably 60 to 95 wt.%, more preferably in an amount of 60 to 90 wt.%.

In addition to above described polymer components, the composition (A) and/or composition (B) may contain further components, such as further polymers and/or additives.

The cable according to the present invention comprises layers made from a semiconductive composition (A) and an insulating composition (B). These compositions preferably are crosslinkable. Crosslinking may be achieved by radical reaction using irradiation or preferably using a crosslinking agent, which is typically a free radical generating agent, or by the incorporation of crosslinkable groups into polymer component(s), as known in the art.

The free radical generating crosslinking agent can be a radical forming crosslinking agent which contains at least one -O-O- bond or at least one

-N=N- bond. More preferably, the crosslinking agent is a peroxide, whereby the crosslinking is preferably effected using a well known peroxide crosslinking technology that is based on free radical crosslinking and is well described in the field. The peroxide can be any suitable peroxide, e.g. such conventionally used in the field.

If a peroxide is used as a cross-linking agent, then the cross-linking agent is preferably used in an amount of less than 10 wt%, more preferably in an amount of between 0.2 to 8 wt%, still more preferably in an amount of 0.2 to 3 wt% and most preferably in an amount of 0.3 to 2.5 wt% with respect to the total weight of the composition to be cross-linked.

As mentioned above crosslinking may also be achieved by incorporation of crosslinkable groups, preferably hydrolysable silane groups, into the polymer component(s) of any of the composition (A) and/or composition (B). The hydrolysable silane groups may be introduced into the polymer by copolymerisation of e.g. ethylene monomers with silane group containing comonomers or by grafting with silane groups containing compounds, i.e. by chemical modification of the polymer by addition of silane groups mostly in a radical reaction. Such silane groups containing comonomers and compounds are well known in the field and e.g. commercially available. The hydrolysable silane groups are typically then crosslinked by hydrolysis and subsequent condensation in the presence of a silanol-condensation catalyst and $H_2O$ in a manner known in the art. Also silane crosslinking technique is well known in the art.

In the following, preferred and optional embodiments for compositions (A) and (B) and/or the layers made thereof are given.

Preferably, the layers made of compositions (A) and (B) are crosslinked in the cable. The crosslinking is preferably carried out by free radical reaction using one or more free radical generating agents, such as peroxide(s).

In addition to crosslinking agent(s) as optional additives the polymer composition (A) and/or (B) may contain further additive(s), such as antioxidant(s), stabiliser(s), water tree retardant additive(s), processing aid(s), scorch retarder(s), metal deactivator(s), crosslinking booster(s), flame retardant additive(s), acid scavenger(s), inorganic filler(s) and/or voltage stabilizer(s). As antioxidant, sterically hindered or semi-hindered phenols, aromatic amines, aliphatic sterically hindered amines, organic phosphates, thio compounds, and mixtures thereof, can be mentioned. Alternatively or additionally the composition (A) and/or composition (B) may contain further components such as further polymers.

Preferably the composition (A) and/or, respectively, composition (B), preferably both, contain no further polymer components in addition to the claimed polar copolymer (a) and, respectively, polar copolymer (b2) and the low-polar polyolefin (b1).

If one or more antioxidant(s) is used, the added amount can range from 0.005 to 2.5 wt-%, based on the weight of the polymer. The antioxidant(s) are preferably added in an amount of 0.005 to 2 wt-%, more preferably 0.01 to 1.5 wt-%, even more preferably 0.05 to 1.5 wt-%, based on the weight of the composition.

Further additive(s) may be present in an amount of 0.005 to 3 wt%, more preferably 0.005 to 2 wt%. Flame retardant additive(s) and inorganic filler(s) can be added in higher amounts.

The present invention further concerns a cable comprising a conductor surrounded by at least one semiconductive layer and at least one insulation layer, in any order, wherein

- the semiconductive layer consists of a composition (A) comprising a polar copolymer (a) and carbon black, and

- the insulation layer consists of a composition (B) comprising a polar copolymer (b2),

and wherein the absolute value of the difference of the melting temperature $T_m(a)$ of said polar copolymer (a) and the melting temperature $T_m(b2)$ of said polar copolymer (b2) is smaller than 25 °C,
the cable being furthermore preferably characterized by the feature that

- a model cable made with compositions (A) and (B) in accordance with the procedure as described below has a breakdown strength of at least 45 kV/mm, still more preferably of at least 50 kV/mm, still more preferably of at least 55 kV/mm, still more preferably at least 60 kV/mm, and most preferably of at least 65 kV/mm, as determined after wet ageing of the model cable for 1000 hours as described below.

Said cable comprises preferably a conductor surrounded by at least a semiconductive layer and an insulation layer, in that order. Moreover, the cable characterised by these model cable characteristics comprises the compositions (A) and (B) as described in any of the embodiments described above. More preferably, the cable comprises a conductor surrounded by an inner semiconductive layer, insulation layer and optionally, and preferably, an outer semiconductive layer, in that order, wherein at least the inner semiconductive layer consists of the composition (A) as defined above.

The invention also provides a process for producing the cable of the invention, preferably a cable comprising a conductor surrounded by at least an semiconductive layer and an insulation layer, preferably by an inner semiconductive layer, insulation layer and optionally, and preferably, an outer semiconductive layer, in that order, wherein the process comprises the steps of

(a) providing a composition (A) comprising a polar copolymer (a), carbon black and optionally further components, and meltmixing the composition (A) comprising a polar copolymer (a) and carbon black, preferably in the presence of further component(s), more preferably at least additive(s) selected at least from a crosslinking agent,
(b) providing a composition (B) comprising a polar copolymer (b2), a low-polar polyolefin (b1) and optionally further component(s), and meltmixing the composition (B) comprising a polar copolymer (b2) a low-polar polyolefin (b1) and optionally further component(s), preferably in the presence of additive(s) selected at least from a crosslinking agent, and
(c) applying, preferably by coextrusion, on a conductor

- the meltmix of composition (A) obtained from step (a) to form a semiconductive layer, preferably at least the inner semiconductive layer and optionally, if present, the outer semiconductive layer, and

- the meltmix of composition (B) obtained from step (b) to form the insulation layer.

Meltmixing is a well known blending method, wherein the components of the polymer composition are mixed in an elevated temperature, which is typically at least 20°C above the melting or softening point of at least the polymer component(s). Meltmixing can be effected in a conventional mixing device and/or extruder, as well known.
The term "(co)extrusion" means herein that in case of two or more layers, said layers can be extruded in separate steps, or at least two or all of said layers can be coextruded in a same extrusion step, as well known in the art.
As well known, the composition (A) and/or composition (B) can be produced before or during the cable production process. Moreover the composition (A) and composition (B) can each independently comprise part or all of the component(s) thereof before introducing to the meltmixing step a) and b) of the cable production process.
Accordingly, the composition (B) may be produced e.g by meltmixing the polar copolymer (b2) together with low-polar polyolefin (b1) and optionally with further component(s), such as additive(s) and then, preferably, the obtained mixture is pelletised before the composition (B) is used to the preparation process of the cable. The obtained polymer mixture of composition (B), preferably in form of pellets, is then provided to the production line of the cable for meltmixing step (b). As an equal alternative the composition (B) may be prepared in connection with the cable production line e.g. by providing the polar copolymer (b2), preferably in form of pellets, the low-polar polyolefin (b1), preferably in form of pellets, and optionally further component(s) and then by meltmixing the components in step (b) of the cable production process.
The meltmixing step (a) and/or (b) can partly be carried out in an optional separate mixer preceding the cable extruder or only in the cable extruder. Mixing in the preceding separate mixer can be carried out by mixing or meltmixing the pellets.
Also accordingly, part or all of the optional additives can be added to the composition or to any polymer component(s) thereof before the cable production process or during the cable production process. As well known, each additive can be added independently onto the solid pellets or powder of the composition, or onto the solid pellets or powder of any polymer component(s) thereof. If part or all of the additives, such as crosslinking agent and/or antioxidant(s), are added to the composition during the preparation process of a cable, then the additive(s) can be added simultaneously or separately as such, preferably in liquid form, or in a well known master batch to the composition e.g. in an optional separate mixer preceding the cable extruder, before they are introduced to the cable extruder, or, alternatively, said additive(s) can be added at any stage during the mixing step in the cable extruder, or by both means.

More specifically, according to the first preferred embodiment of the cable production process, the polymer component(s) of the layer composition, the polar copolymer (b2) and low-polar polyolefin (b1) of the composition (B), are provided in pellet or powder form and meltmixed with each other and preferably with one or more antioxidant(s), optionally in combination with further additive(s). The antioxidant(s) can be added to the polymer component(s) before or during the meltmixing step. The obtained melt mix is then pelletised. As a second step at least the crosslinking agent(s), preferably a peroxide, and, optionally, a scorch retarder(s) and/or a crosslinking booster(s) are added to the formed pellets. Alternatively, the optional scorch retarder(s) and/or crosslinking booster(s) could already be added in the first step, together with the antioxidant(s). The final pellets are then used for the cable production process, whereby they are fed to the extruder, e.g. a cable extruder, for the mixing step of the cable preparation process of the invention. Also preferably in this embodiment a composition (B) comprising the polar copolymer (b2) and low-polar polyolefin (b1) is prepared by mixing the pellets comprising polar copolymer (b2) and optional additive(s) together with pellets comprising the low-polar polyolefin (b1) and optional additive(s) prior to cable production process, and then as a next step by adding preferably at least crosslinking agent(s), preferably peroxide(s), and optionally further additive(s), such as a scorch retarder(s) and/or a crosslinking booster(s), preferably in liquid form, to the obtained mixture of pellets. The final mixture of pellets is then used for the cable production process, whereby they are fed to the extruder, e.g. a cable extruder, for the mixing step of the cable preparation process of the invention.

According to the second equally preferred embodiment, instead of the above "two-step" process for preparing pellets of the polymer composition, the polymer component(s), preferably in the form of pellets or powder, and preferably at least the antioxidant(s) and crosslinking agent(s), as well as optional further additive(s) such as a scorch retarder(s) and/or a crosslinking booster(s), of the layer composition are combined together in a compounding extruder, single or twin screw, at the mixing step during the cable production process of the invention. More preferably in this embodiment, wherein the composition (B) comprises the polar copolymer (b2) and low-polar polyolefin (b1), then pellets comprising at least the low-polar polyolefin (b1) and, optionally, antioxidant(s) and further additive(s) are provided to the mixing step (b) of the cable production process. Then, preferably at least crosslinking agent(s) and, optionally further additives preferably selected from a scorch retarder(s) and/or a crosslinking booster(s), as well as the polar copolymer (b2), if not already present in the pellets containing the low-polar polyolefin (b1), and optional further polymer component(s), are added to the pellets during the mixing step (b) of the cable production process. The addition can be made prior to the hopper of the cable extruder, such as in the preceding mixer as mentioned above, in said hopper or directly in the cable extruder. Alternatively, the crosslinking agent(s) and/or the optional further additives selected preferably from scorch retarder(s) and/or crosslinking booster(s) can already be added to the pellets before feeding these pellets into the cable extruder.

Preferably, composition (A) and composition (B) are crosslinkable and are crosslinked at an elevated temperature. Typically, this is done at a temperature around 150 °C or higher, more preferably above 160 °C or higher within the cable. Depending on the type of crosslinking agent crosslinking could be conducted at another minimum temperature which would be obvious for a person skilled in the art.

The invention is also directed to the use of a cable in any of the above embodiments as a power cable.

## Methods and Examples

**a)** Melting temperature

The measurement of the melting temperature $T_m(a)$, $T_m(b1)$ and $T_m(b2)$ was carried out by Differential Scanning Calorimetry (DSC) according to ISO 11357-6 using a heating and cooling rate of 10°C/min.

The melting temperature $T_m$ of the used polymers was measured in accordance with ASTM D3418.

$T_m$ was measured with Mettler TA821 using a $5 \pm 1$ mg sample in a nitrogen atmosphere. First the sample was melted (30 °C to 180 °C with a heating rate of 10 °C/min) and then it was held at 180 °C for 5 min. After that the sample was cooled down to -30 °C with a cooling rate of 10 °C/min followed by a second melting (-30 °C to 180 °C at a heating rate of 10 °C/min). The data reported and used in Tables 1 to 3 were all taken from the second melting. For the determination of $T_m$ a base line was drawn from 0 °C to the point in the DSC curve where the melting is completed. $T_m$ is defined as the temperature where the heat flow to the sample is at its maximum, e.g. where the distance from the measured DSC curve and the base line is at its maximum.

**b)** Comonomer content of polar comonomers

(1) Polymers containing > 6 wt.% polar comonomer units

Comonomer content (wt%) was determined in a known manner based on Fourier transform infrared spectroscopy (FTIR) determination calibrated with quantitative nuclear magnetic resonance (NMR) spectroscopy. Below is exemplified the determination of the polar comonomer content of ethylene ethyl acrylate, ethylene butyl acrylate and ethylene methyl acrylate. Film samples of the polymers were prepared for the FTIR measurement: 0.5-0.7 mm thickness was used for ethylene butyl acrylate and ethylene ethyl acrylate and 0.10 mm film thickness for ethylene methyl acrylate in amount of >6wt%. Films were pressed using a Specac film press at 150°C, approximately at 5 tons, 1-2 minutes, and then cooled with cold water in a not controlled manner. The accurate thickness of the obtained film samples was measured.
After the analysis with FTIR, base lines in absorbance mode were drawn for the peaks to be analysed. The absorbance peak for the comonomer was normalised with the absorbance peak of polyethylene (e.g. the peak height for butyl acrylate or ethyl acrylate at 3450 $cm^{-1}$ was divided with the peak height of polyethylene at 2020 $cm^{-1}$). The NMR spectroscopy calibration procedure was undertaken in the conventional manner which is well documented in the literature, explained below.
For the determination of the content of methyl acrylate a 0.10 mm thick film sample was prepared. After the analysis the maximum absorbance for the peak for the methylacrylate at 3455 $cm^{-1}$ was subtracted with the absorbance value for the base line at 2475 $cm^{-1}$ ($A_{methylacrylate}$ - $A_{2475}$). Then the maximum absorbance peak for the polyethylene peak at 2660 $cm^{-1}$ was subtracted with the absorbance value for the base line at 2475 $cm^{-1}$ ($A_{2660}$ -$A_{2475}$). The ratio between ($A_{methylacrylate}$-$A_{2475}$) and ($A_{2660}$-$A_{2475}$) was then calculated in the conventional manner which is well documented in the literature.
The weight-% can be converted to mol-% by calculation. It is well documented in the literature.

Quantification of copolymer content in polymers by NMR spectroscopy

The comonomer content was determined by quantitative nuclear magnetic resonance (NMR) spectroscopy after basic assignment (e.g. "NMR Spectra of Polymers and Polymer Additives", A. J. Brandolini and D. D. Hills, 2000, Marcel Dekker, Inc. New York). Experimental parameters were adjusted to ensure measurement of quantitative spectra for this specific task (e.g "200 and More NMR Experiments: A Practical Course", S. Berger and S. Braun, 2004, Wiley-VCH, Weinheim). Quantities were calculated using simple corrected ratios of the signal integrals of representative sites in a manner known in the art.

(2) Polymers containing 6 wt.% or less polar comonomer units

Comonomer content (wt.%) was determined in a known manner based on Fourier transform infrared spectroscopy (FTIR) determination calibrated with quantitative nuclear magnetic resonance (NMR) spectroscopy. Below is exemplified the determination of the polar comonomer content of ethylene butyl acrylate and ethylene methyl acrylate. For the FT-IR measurement a film samples of 0.05 to 0.12 mm thickness were prepared as described above under method 1). The accurate thickness of the obtained film samples was measured.
After the analysis with FT-IR base lines in absorbance mode were drawn for the peaks to be analysed. The maximum absorbance for the peak for the comonomer (e.g. for methylacrylate at 1164 $cm^{-1}$ and butylacrylate at 1165 $cm^{-1}$) was subtracted with the absorbance value for the base line at 1850 $cm^{-1}$ ($A_{polar}$ comonomer - $A_{1850}$). Then the maximum absorbance peak for polyethylene peak at 2660 $cm^{-1}$ was subtracted with the absorbance value for the base line at 1850 $cm^{-1}$($A_{2660}$ - $A_{1850}$). The ratio between ($A_{comonomer}$-$A_{1850}$) and ($A_{2660}$-$A_{1850}$) was then calculated. The NMR spectroscopy calibration procedure was undertaken in the conventional manner which is well documented in the literature, as described above under method 1).
The weight-% can be converted to mol-% by calculation. It is well documented in the literature.
Below is exemplified how polar comonomer content obtained from the above method (1) or (2), depending on the amount thereof, can be converted to micromol or mmol per g polar comonomer as used in the definitions in the text and claims:

The millimoles (mmol) and the micro mole calculations have been done as described below.

For example, if 1 g of the poly(ethylene-co-butylacrylate) polymer, which contains 20 wt% butylacrylate, then this material contains $0.20/M_{butylacrylate}$ (128 g/mol) = 1.56 x $10^{-3}$ mol. (=1563 micromoles).
The content of polar comonomer units in the polar copolymer $C_{polar}$ comonomer is expressed in mmol/g (copolymer). For example, a polar poly(ethylene-co-butylacrylate) polymer which contains 20 wt.% butyl acrylate comonomer

units has a $C_{polar}$ comonomer of 1.56 mmol/g.

$$\text{The used molecular weights are: } M_{butylacrylate} = 128 \text{ g/mole}, M_{ethylacrylate} = 100$$
$$\text{g/mole}, M_{methylacrylate} = 86 \text{ g/mole}).$$

**c)** Wet ageing test:

The wet ageing test is based on a procedure described in an article by Land H.G. and Schädlich H., "Model Cable Test for Evaluating the Ageing Behaviour under Water Influence of Compounds for Medium Voltage Cables", Conference Proceedings of Jicable 91, June 24 to 28, 1991, Versaille, France and in the article by U.H. Nilsson "The Use of Model Cables for Evaluation of the Electrical Performance of Polymeric Power Cable Materials", Conference Proceedings of NORD-IS, June 13 to 15, 2005 , Trondheim, Norway.

The wet ageing properties were evaluated on model cables. These cables consist of a 1.38 mm diameter Cu wire onto which an inner semiconductive layer, an insulation layer and an outer semiconductive layer are applied. Insulation layer consists of the test insulation composition and the inner and outer semiconductive layers consist of the same semiconducting test composition. The model cable has the following construction: inner semiconductive layer of 0.7 mm, insulation layer of 1.5 mm and outer semiconductive layer of 0.15 mm. The cables are extruded in a 1+2 extruder configuration and vulcanised in a dry-curing CCV tube, i.e. the material is crosslinked. The crosslinking is effected by the peroxides being present in the materials. After this the model cables are preconditioned at 80 °C for 72h.

The Cu wire is removed and then replaced by a thinner Cu wire. The cables are put into water bath to be aged for 1000 h under electric stress and at a temperature of 70 °C of the surrounding water and at a temperature of the water in the conductor area of 85 °C. The initial breakdown strength as well as the breakdown strength after 1000 h wet ageing are determined. The cables are prepared and aged as described below.

- Preconditioning: 80 °C, 72 h

- Applied voltage: 9 kV/50 Hz

- Electric stress (max.): 9 kV/mm

- Electric stress (mean): 6 kV/mm

- Conductor temperature: 85° C

- Water bath temperature: 70° C

- Ageing time: 1000 h

- Deionized water in conductor and outside

Five specimens with 0.50 m active length from each cable are aged.

The specimens are subjected to ac breakdown tests (voltage ramp: 100 kV/min.) and the Weibull 63.2 % values of the breakdown strength (field stress at the inner semiconductive layer) are determined before and after ageing.

**d)** Method for determination of the amount of double bonds in the Polymer Composition or in the polymer

The below methods can be used for determining the amount of carbon-carbon double bonds present in any of the low-polar polyolefin (b1), the polar copolymer (a), the polar copolymer (b2), the composition (A) or the composition (B), as desired, and, for the convenience, the below used term "polymer" refers shortly any of these determinable options. Moreover the procedure 1) and 2) as outlined below is to be used for those polymers which have no or which have a polar comonomer content less than 0.4 wt.%. For such polymers the total amount of carbon-carbon double-bonds means preferably the sum of vinyl, vinylidene and *trans*-vinylene groups as exemplified below. If the amount of polar comonomer units in the polymer is higher than 0.4 wt%, the procedure 3) as described below is used. If the polymer, i.e. herein polymer component(s), composition (A) and/or composition (B), contains low molecular weight compounds which are desired to contribute to the total amount of double bonds in the polymer, then the amount of double bonds originating from such low molecular weight compound(s) can be measured as outlined in method 4) and the total amount of double bonds in the polymer is then the sum of double bond contents resulting from method 1) and/or 3) (depending on the type of the polymer) and from method 4).

The methods 1)-4), unless otherwise stated, are based upon the standard methods ASTM D3124-98 and ASTM D6248-98, wherein ASTM D3124-98 describes the determination of vinylidene groups/1000 C based upon 2,3-dimethyl-1,3-butadiene, ASTM D6248-98 describes the determination of vinyl groups/1000 C based on 1-octene and of *trans*-vinylene groups/1000 C based on *trans*-3-hexene.

All FTIR measurements were performed on a Perkin Elmer 2000 instrument, supplied by Perkin Elmer.

1) The total amount of carbon-carbon double bonds present in polymer that contains <0.4 wt% of polar comonomer units

To be able to quantify the number of carbon-carbon double bonds in a polymer or in a polymer composition (e.g. the number of double bonds/1000 C) the extinction coefficient (B) for the specific double bond needs to be known. The determination of B is based on model compounds containing the double bond structure to be determined. The used model compounds can vary depending on which double bond structure that needs to be determined. Below is described the quantification of the number of vinyl, vinylidene and trans-vinylene groups which at least and most preferably form the total amount of double bonds present in the polymer.

For the determination of the extinction coefficient (= molar absorptivity) for these three types of double bonds, the following three model compounds have been used: 1-decene for vinyl, 2-methyl-1-heptene for vinylidene and *trans*-4-decene for *trans*-vinylene, and the procedure as described in ASTM D3124-98 (section 10) and ASTM D6248-98 (section 10) was followed, except that peak height in absorbance mode was used for the calculation instead of integrated peak area.

The molar absorptivity (B) for different types of double bonds (vinyl, vinylidene and *trans*-vinylene) can be determined according to ASTM D3124-98 and ASTM D6248-98. At least three solutions of the model compounds in $CS_2$ (carbon disulfide) are prepared. The used concentrations of the solutions are close to 0.18 mol/l. The solutions are analysed with FTIR and scanned with resolution 4 cm$^{-1}$ in a liquid cell with path length 0.1 mm. The maximum intensity of the absorbance peak that relates to the target double bond is measured (vinyl, vinylidene and *trans*-vinylene).

The molar absorptivity, B, in litres/(mol x mm) for each solution and type of double bond is calculated using the following equation:

$$B = [(1/CxL)] \; x \; A$$

wherein C = concentration of each type of carbon-carbon double bond to be measured, mol/l, L = cell thickness, mm, A = maximum absorbance (peak height) of the peak of each type of carbon-carbon double bond to be measured, mol/l.

The average of the molar absorptivity, B, for each type of double bond is calculated.

The average molar absorptivity, B, of each type of carbon-carbon double bond can then be used for the calculation of the concentration of double bonds in the polymer to be analysed, preferably the amount of vinyl bonds, vinylidene bonds and *trans*-vinylene bonds per 1000 carbon atoms.

The amount of carbon-carbon double bonds is determined from a film sample consisting of the polymer. The film samples are 0.5-1 mm thick and are prepared by compression moulding. The actual film thickness was measured for the below calculations. The films are analysed with FT-IR and scanned with a resolution of 4 cm$^{-1}$. A base line was drawn from 980 cm$^{-1}$ to around 840 cm$^{-1}$ in the absorbance spectrum. The peak heights were determined at around 888 cm$^{-1}$ for vinylidene, around 910 cm$^{-1}$ for vinyl and around 965 cm$^{-1}$ for *trans*-vinylene. The total amount of carbon double bonds expressed as "number/1000 C" is calculated from the following equations:

$$Vinylidene/1000C = (Ax14)/(18.24xLxD)$$

wherein the molar absorptivity B is 18.24 calculated from the analyses of the solutions containing 2-methyl-1-heptene.

$$Vinyl/1000C = (Ax14)/(13.13xLxD)$$

wherein the molar absorptivity B is 13.13 calculated from the analyses of the solutions containing 1-decene.

$$Trans\text{-}vinylene/1000C= (Ax14)/(15.14xLxD)$$

wherein the molar absorptivity B is 15.14 calculated from the analyses of the solutions containing *trans*-4-decene.

A= absorbance (here peak height), L=film thickness (mm), D=density of the material (g/cm$^3$).

2) Determination of the number of vinyl groups originating from the polyunsaturated comonomer per 1000 C present in a polymer

The amount of vinyl groups originating from the polyunsaturated comonomer per 1000 C was determined as described below.

For this determination there is a need to have a sample of the polymer to be analysed (i.e. the polymer that has been polymerised in the presence of a polyunsaturated comonomer) and to have a sample of a reference polymer. This reference polymer needs then to be polymerised under as similar conditions as the polymer to be analysed (i.e. the one containing the polyunsaturated comonomer) for example the same type of reactor set up, as similar temperature settings, pressure, production rate, monomer feed, type and amount of CTA, if used, etc, but with the only difference that the polyunsaturated comonomer is not added. Then the number of vinyl groups is determined from the polymer to be analysed as well as from the reference polymer according to the procedure 1) above. The number of vinyl groups in the polymer to be analysed includes vinyls that are created by the process and vinyls which are incorporated to the polymer by copolymerisation of polyunsaturated comonomer. The number of vinyl groups analysed in the reference polymer includes only the vinyl groups created by the process under the selected polymerisation conditions. Then the amount of vinyl groups originating from the polyunsaturated comonomer can be determined as:

Total number of vinyl groups in the polymer to be analysed subtracted by the total number of vinyl groups in the reference polymer.

3) Method for the determination of the amount of double bonds for polymers having units derived from a polar comonomer and having a polar comonomer content higher than 0.4 wt.%:

The procedure corresponds to the one outlined above under method 1) and 2) with the exception of base line definition. The base line for e.g. EBA (poly(ethylene-co-butylacrylate)) is 917-868 cm$^{-1}$ and for EMA (poly(ethylene-co-methacrylate)) 929-872 cm$^{-1}$ in absorbance mode. The procedure is to be used for the polar copolymer and, if present, for those unsaturated polyolefins having units originating from a polar comonomer in a content higher than 0.4 wt%.

Total double bond content for the polar copolymer component is based on the sum of vinyl/1000 C and vinylidene/1000C.

4) Determination of the double bond content of any unsaturated low molecular weight compound, e.g. an additive which contributes to the total amount of the double-bonds, if present in the polymer (the unsaturated low molecular weight compound is referred below as Compound)

Calibration procedure: The molar absorptivity (B) for Compound (e.g. a crosslinking booster or a scorch retardant compound as exemplified in the description part) can be determined according to ASTM D3124-98 and ASTM D6248-98. At least three solutions of the Compound in CS$_2$ (carbon disulfide) are prepared. The used concentrations of the solutions are close to 0.18 mol/l. The solutions are analysed with FTIR and scanned with resolution 4 cm$^{-1}$ in a liquid cell with path length 0.1 mm. The maximum intensity of the absorbance peak that relates to the unsaturated moiety of the Compound(s) (each type of carbon-carbon double bonds present) is measured.

The molar absorptivity, B, in litres/molxmm for each solution and type of double bond is calculated using the following equation:

$$B = [(1/CxL)] \text{ x } A$$

wherein C = concentration of each type of carbon-carbon double bond to be measured, mol/l, L = cell thickness, mm, A = maximum absorbance (peak height) of the peak of each type of carbon-carbon double bond to be measured, mol/l.

The average of the molar absorptivity, B, for each type of double bond present in the Compound is calculated.

The average molar absorptivity, B, of each type of carbon-carbon double bond present in the Compound can then be used for the calculation of the concentration of double bonds (per 1000 carbon atoms) in the polymer to be analysed.

**e)** Melt Flow Rate

The melt flow rate is equivalent to the term "melt index" and is determined according to ISO 1133 and is indicated in g/10 min. Melt flow rate is determined at different loadings, such as 2.16 kg (MFR2). Melt flow rate is determined at a temperature of 190°C for polyethylene resins and at 230°C for polypropylene resins.

**f)** Density

For the determination of the density ISO1872:2 was used for the sample preparation and ISO 1183:2 for the density measurement.

**Examples**

Model cables have been produced in accordance with method c) described above using four different compositions (A) for the semiconductive layers (as indicated in Table 1) and four different compositions (B) for the insulation layer (as indicated in Table 2).

Table 1: Semiconductive materials used in the examples

| Semiconductive | Semicon 1 | Semicon 2 | Semicon 3 |
|---|---|---|---|
| Polar copolymer (a) | EBA[1] | EEA[2] | EMA[3] |
| Polar copolymer (a) Melt. temperature (°C) | 95 | 99 | 106 |
| Polar copolymer (a)-Comonomer content (wt%) | 17 | 15 | 8 |
| Carbon black (wt%) | 39 | 37 | 33 |
| Crosslinking agent: bis(tert-butylperoxyisopropyl)benzene (wt% added to above mix) | 1 | 1 | 1 |
| [1]EBA: poly(ethylene-co-butylacrylate) [2]EEA: poly(ethylene-co-ethylacrylate) [3]EMA: poly(ethylene-co-methacrylate) | | | |

Table 2: Insulating materials used in the examples

| Insulation | Comparative Insulation 1 | Insulation 2 | Insulation 3 | Insulation 4 |
|---|---|---|---|---|
| Low-polar polyolefin b1 | LDPE[4] | LDPE[4] | LDPE[4] | LDPE[5] |
| Low-polar polyolefin b1 - Melt. Temp. (°C) | 110-112 | 110-112 | 110 | 111-112 |
| Polar polymer b2 | - | EBA | EEA | EMA |
| Polar polymer b2 - Melt. Temp. (°C) | - | 93 | 99 | 98 |
| Total comonomer content in insulation (wt%) | - | 3.8 | 3.5 | 3 |
| Crosslinking agent[6] (wt.%) | 2 | 2 | 2 | 2 |
| [4]LDPE (here used as low-polar polyolefin): Low density ethylene polymer from radical polymerisation at high pressure. Density = 922 kg/m$^3$, [5]A poly(ethylene-co-1,7-octadiene) polymer produced from radical copolymerisation of ethylene and a 1,7-octadiene comonomer in a high pressure reactor. Density = 922 kg/m$^3$. [6]Dicumylperoxide (wt% added to above mix), CAS number 80-43-3. | | | | |

Table 3: Overview of absolute value of the difference of the melting temperature $T_m(a)$ and $T_m(b2)$ [°C]:

| | Semicon 1 (a) $T_m$ = 95°C | Semicon 2 (a) $T_m$ = 99°C | Semicon 3 (a) $T_m$ = 106°C |
|---|---|---|---|
| Comparative Insulation 1 | | | |
| Insulation 2 (b2), $T_m$=93°C | 2 | 6 | 13 |

(continued)

|  | Semicon 1 (a) $T_m$ = 95°C | Semicon 2 (a) $T_m$ = 99°C | Semicon 3 (a) $T_m$ = 106°C |
|---|---|---|---|
| Insulation 3 (b2), $T_m$=99°C | 4 | 0 | 7 |
| Insulation 4 (b2), $T_m$=98°C | 3 | 1 | 8 |

Table 4: Overview of polar group combination

|  | Semicon 1 (a) EBA | Semicon 2 (a) EEA | Semicon 3 (a) EMA |
|---|---|---|---|
| Comparative Insulation 1 | EBA/none | EEA/ none | EMA/ none |
| Insulation 2 (b2) EBA | EBA/EBA | EEA/ EBA | EMA/ EBA |
| Insulation 3 (b2) EEA | EBA/EEA | EEA/ EEA | EMA/ EEA |
| Insulation 4 (b2) EMA | EBA/EMA | EEA/EMA | EMA/ EMA |

Table 5: Breakdown strength after wet ageing of model cables (ageing time: 1000 h) in kV/mm:

|  | Semicon 1 | Semicon 2 | Semicon 3 |
|---|---|---|---|
| Comparative Insulation 1 | 38.2 (Comp.) | 42.5 (Comp.) |  |
| Insulation 2 | 58.7 | 48.6 |  |
| Insulation 3 | 61.3 | 69 | 52.1 |
| Insulation 4 | 82 | 81.6 | 84.1 |

**Claims**

1. Cable comprising a conductor surrounded by at least one semiconductive layer and at least one insulation layer, in any order, wherein

   - the semiconductive layer consists of a composition (A) comprising a polar copolymer (a) and carbon black, and
   - the insulation layer consists of a composition (B) comprising a polar copolymer (b2),

   wherein the absolute value of the difference of the melting temperature $T_m(a)$ of said polar copolymer (a) and the melting temperature $T_m(b2)$ of said polar copolymer (b2) is smaller than 25 °C,
   wherein the polar copolymer (a) and the polar copolymer (b2) contain polar groups and wherein the composition (B) further comprises a low-polar polyolefin (b1), which contains polar groups or no polar groups, whereby the amount of polar groups, if present, in low-polar polyolefin (b1) is lower than the amount of polar groups present in the polar copolymers (a) and (b2), and
   wherein the content of polar comonomer(s), expressed in millimoles (mmol) per gram copolymer, present in polar copolymer (a) ($C_{polar\ comonomer}(a)$) and in polar copolymer (b2) ($C_{polar\ comonomer}(b2)$) satisfies the relation:

$$- 15 \text{ mmol/g} < C_{polar\ comonomer}(a) - C_{polar\ comonomer}(b2) < 15 \text{ mmol/g}.$$

2. Cable according to claim 1, wherein the polar groups present in the polar copolymers (a) and (b2), and optionally present in the low-polar polyolefin (b1), originate from polar comonomer(s) present in the polar copolymers (a) and (b2) and optionally present in the low-polar polyolefin (b1), whereby the amount of polar comonomer(s), if present, in the low-polar polyolefin (b1) is preferably less than 150 micromoles per gram of the low-polar polyolefin.

3. Cable according to any of the preceding claims, wherein polar copolymer (a) and polar copolymer (b2) comprise at least one identical type of polar comonomer(s).

17

4. Cable according to any of the preceding claims, wherein the amount of polar comonomer(s) in the polar copolymer (a) and/or (b2) is selected independently and is more than 500 micromoles per gram of the polar copolymer.

5. Cable according to the any of the preceding claims, wherein the cable comprises a conductor surrounded by a inner semiconductive layer, insulation layer and optionally, and preferably, an outer semiconductive layer, in that order, whereby at least the inner semiconductive layer consists of the composition (A) as defined in claim 1.

6. Cable according to any of the preceding claims, wherein polar copolymer (a) and/or (b2) is a copolymer of ethylene with at least the polar comonomer(s), wherein the polar comonomer(s) is/are selected from comonomer(s) containing hydroxyl group(s), alkoxy group(s), carbonyl group(s), carboxyl group(s), ether group(s) or ester group(s),

- preferably the polar comonomer(s) of polar copolymer (a) is same as the polar comonomer(s) of polar copolymer (b2) or the polar comonomer(s) are selected from the group of alkyl acrylates, alkyl methacrylates or vinyl acetate, more preferably the polar copolymer (a) and/or (b2) is a copolymer of ethylene with $C_1$- to $C_4$-alkyl acrylate, such as methyl, ethyl, propyl or butyl acrylate, or vinyl acetate, or,
- more preferably, the polar copolymer (a) is a copolymer of an olefin with methyl acrylate, ethyl acrylate or butyl acrylate, or with any mixtures thereof, more preferably with methyl acrylate, ethyl acrylate or butyl acrylate,
- more preferably, the polar copolymer (b2) is a copolymer of an olefin with methyl acrylate, ethyl acrylate or butyl acrylate, or with any mixtures thereof, more preferably with methyl acrylate, ethyl acrylate or butyl acrylate,
- more preferably, the polar comonomer(s) of polar copolymer (a) is same as the polar comonomer(s) of polar copolymer (b2) and selected from methyl acrylate, ethyl acrylate or butyl acrylate,
- more preferably, if the low-polar polyolefin (b1) is a polar copolymer, then it is preferred that said polar copolymer comprises the same polar comonomer as the polar copolymer (b2), preferably is a copolymer of an olefin with methyl acrylate, ethyl acrylate or butyl acrylate, or with any mixtures thereof, more preferably with methyl acrylate, ethyl acrylate or butyl acrylate.

7. Cable according to any of the preceding claims, wherein composition (A) comprises carbon black in an amount of 10 to 50 wt.%.

8. Cable according to any of the preceding claims, wherein composition (A) and/or (B) contains a cross-linking agent.

9. Cable according to any of the preceding claims, wherein low-polar polyolefin (b1) is a low density polyethylene (LDPE) polymer produced in a high pressure (HP).

10. Cable according to any of the preceding claims, wherein low-polar polyolefin (b1) is present in an amount of 30 wt.% or more, preferably of from 60 to 95 wt.% with respect to composition (B).

11. Cable according to any of the preceding claims, wherein a model cable made from the compositions (A) and composition (B) has a breakdown strength of at least 45 kV/mm after 1000 hour wet ageing.

12. Process for the production of a cable according to any of claims 1 to 11 wherein the cable comprises a conductor surrounded by at least an semiconductive layer and an insulation layer, preferably at least by an inner semiconductive layer, insulation layer and optionally, and preferably, an outer semiconductive layer, in that order, wherein the process comprises the steps of

(a) providing a composition (A) comprising a polar copolymer (a), carbon black and optionally further components, and meltmixing the composition (A) comprising a polar copolymer (a) and carbon black, preferably in the presence of further component(s), more preferably at least additive(s) selected at least from a crosslinking agent,
(b) providing a composition (B) comprising a polar copolymer (b2), a low-polar polyolefin (b1) and optionally further component(s), and meltmixing the composition (B) comprising a polar copolymer (b2), a low-polar polyolefin (b1), and optionally further component(s), preferably in the presence of additive(s) selected at least from a crosslinking agent, and
(c) applying, preferably by coextrusion, on a conductor

- the meltmix of composition (A) obtained from step (a) to form a semiconductive layer, preferably at least the inner semiconductive layer, and optionally, if present, the outer semiconductive layer, and
- the meltmix of composition (B) obtained from step (b) to form the insulation layer.

**13.** The process of claim 12, wherein in step (b):

- polymer pellets of the composition (B) which comprise the polar copolymer (b2), a low-polar polyolefin (b1) and, optionally, additive(s), are added to a cable extruder and mixed at elevated temperature, optionally together with additive(s) added to said cable extruder before or during the mixing step, to form the meltmix of step (b); or
- polymer pellets of the polar copolymer (b2) which optionally comprise additive(s), and polymer pellets of the low-polar polyolefin (b1) which optionally comprise additive(s) are added separately or as a premix of the two type of pellets to a cable extruder and the obtained mixture of the two type of pellets are mixed at elevated temperature, optionally together with additive(s), preferably with at least crosslinking agent(s), added to said cable extruder before or during the mixing step, to form the meltmix of the composition (B) of step (b).

**14.** Use of a cable according to any of claims 1 to 11 as a power cable.

**Patentansprüche**

**1.** Kabel, umfassend einen Leiter, der von mindestens einer halbleitenden Schicht und mindestens einer Isolierschicht, in irgendeiner Reihenfolge, umgeben ist, wobei

- die halbleitende Schicht aus einer Zusammensetzung (A) besteht, die ein polares Copolymer (a) und Ruß umfasst, und
- die Isolierschicht aus einer Zusammensetzung (B) besteht, die ein polares Copolymer (b2) umfasst,

wobei der absolute Wert für den Unterschied von der Schmelztemperatur $T_m(a)$ von dem polaren Copolymer (a) und der Schmelztemperatur $T_m(b2)$ von dem polaren Copolymer (b2) kleiner als 25°C ist,
wobei das polare Copolymer (a) und das polare Copolymer (b2) polare Gruppen enthalten und wobei die Zusammensetzung (B) ferner ein geringpolares Polyolefin (b1) umfasst, das polare Gruppen oder keine polaren Gruppen enthält, wobei die Menge der polaren Gruppen, falls diese vorliegen, in dem geringpolaren Polyolefin (b1) geringer als die Menge der polaren Gruppen ist, die in den polaren Copolymeren (a) und (b2) vorliegen, und
wobei der Gehalt von dem (den) polaren Comonomer(en), ausgedrückt in Millimol (mmol) pro Gramm Copolymer, welcher in dem polaren Copolymer (a) ($C_{\text{polares Comonomer}}(a)$) und dem polaren Copolymer (b2) ($C_{\text{polares Comonomer}}(b2)$) vorliegt, die folgende Beziehung erfüllt:

$$-15 \text{ mmol/g} < C_{\text{polares Comonomer}}(a) - C_{\text{polares Comonomer}}(b2) < 15 \text{ mmol/g}.$$

**2.** Kabel nach Anspruch 1, wobei die polaren Gruppen, die in den polaren Copolymeren (a) und (b2) und optional in dem geringpolaren Polyolefin (b1) vorliegen, von polarem (polaren) Comonomer(en) stammen, das (die) in dem polaren Copolymeren (a) und (b2) und optional in dem geringpolaren Polyolefin (b1) vorliegen, wobei die Menge von dem (den) polaren Comonomer(en), falls diese(s) vorliegt (vorliegen), in dem geringpolaren Polyolefin (b1) vorzugsweise weniger als 150 Mikromol pro Gramm des niederpolaren Polyolefins beträgt.

**3.** Kabel nach einem der vorhergehenden Ansprüche, wobei das polare Copolymer (a) und das polare Copolymer (b2) mindestens einen identischen Typ von polarem(n) Comonomer(en) umfassen.

**4.** Kabel nach einem der vorhergehenden Ansprüche, wobei die Menge von dem (den) polaren Comonomer(en) in dem polaren Copolymer (a) und/oder (b2) unabhängig ausgewählt ist und mehr als 500 Mikromol pro Gramm des polaren Copolymers beträgt.

**5.** Kabel nach einem der vorhergehenden Ansprüche, wobei das Kabel einen Leiter umfasst, der von einer inneren halbleitenden Schicht, einer Isolierschicht und optional und vorzugsweise einer äußeren halbleitenden Schicht, und zwar in dieser Reihenfolge, umgeben ist, wobei mindestens die innere halbleitende Schicht aus der Zusammensetzung (A) wie in Anspruch 1 definiert besteht.

**6.** Kabel nach einem der vorhergehenden Ansprüche, wobei das polare Copolymer (a) und/oder (b2) ein Copolymer von Ethylen mit mindestens dem (den) polaren Comonomer(en) ist, wobei das (die) polare(n) Comonomer(e) aus einem Comonomer(en) ausgewählt ist/sind, das/die Hydroxylgruppe(n), Alkoxygruppe(n), Carbonylgruppe(n), Carboxylgruppe(n), Ethergruppe(n) oder Estergruppe(n) enthält/enthalten,

- wobei vorzugsweise das (die) polare(n) Comonomer(e) von dem polaren Copolymer (a) dasselbe wie das (die) polare(n) Comonomer(e) von dem polaren Copolymer (b2) ist oder dass (die) polare(n) Comonomer(e) aus der Gruppe aus Alkylacrylaten, Alkylmethylacrylaten oder Vinylacetat ausgewählt sind, wobei das polare Copolymer (a) und/oder (b2) ein Copolymer von Ethylen mit $C_1$-bis $C_4$-Alkylacrylat, wie zum Beispiel Methyl-, Ethyl-, Propyl- oder Buthylacrylat, oder Vinylacetat, ist, oder
- wobei besonders vorzugsweise das polare Copolymer (a) ein Copolymer von einem Olefin mit Methylacrylat, Ethylacrylat oder Butylacrylat oder mit irgendeiner Mischung daraus, besonders vorzugsweise mit Methylacrylat, Ethylacrylat oder Butylacrylat ist,
- wobei besonders vorzugsweise das polare Copolymer (b2) ein Copolymer von einem Olefin mit Methylacrylat, Ethylacrylat oder Butylacrylat oder mit irgendeiner Mischung daraus, besonders vorzugsweise mit Methylacrylat, Ethylacrylat oder Butylacrylat ist,
- wobei besonders vorzugsweise das (die) polare(n) Comonomer(e) von dem polaren Copolymer (a) dasselbe wie das (die) polare(n) Comonomer(e) von dem polaren Copolymer (b2) ist und aus Methylacrylat, Ethylacrylat oder Butylacrylat ausgewählt ist,
- wobei besonders vorzugsweise, wenn das geringpolare Polyolefin (b1) ein polares Copolymer ist, es bevorzugt ist, dass das polare Copolymer dasselbe polare Comonomer wie das polare Copolymer (b2) umfasst, vorzugsweise ein Copolymer von einem Olefin mit Methylacrylat, Ethylacrylat oder Butylacrylat oder mit irgendeiner Mischung daraus, besonders vorzugsweise mit Methylacrylat, Ethylacrylat oder Butylacrylat ist.

7. Kabel nach einem der vorhergehenden Ansprüche, wobei die Zusammensetzung (A) Ruß mit einer Menge von 10 bis 50 Gew.-% umfasst.

8. Kabel nach einem der vorhergehenden Ansprüche, wobei die Zusammensetzung (A) und/oder (B) ein Vernetzungsmittel enthält.

9. Kabel nach einem der vorhergehenden Ansprüche, wobei das geringpolare Polyolefin (b1) ein Polyethylenpolymer niederer Dichte (LDPE) ist, das unter Hochdruck (HP, für Englisch: high pressure) hergestellt wird.

10. Kabel nach einem der vorhergehenden Ansprüche, wobei das geringpolare Polyolefin (b1) mit einer Menge von 30 Gew.-% oder mehr, vorzugsweise mit 60 bis 95 Gew.-% in Bezug auf die Zusammensetzung (B) vorliegt.

11. Kabel nach einem der vorhergehenden Ansprüche, wobei ein Musterkabel, das aus der Zusammensetzung (A) und Zusammensetzung (B) hergestellt ist, nach 1000 Stunden Nassalterung eine Spannungsfestigkeit (Englisch: breakdown strength) von mindestens 45 kV/mm aufweist.

12. Verfahren für die Herstellung von einem Kabel nach einem der Ansprüche 1 bis 11, wobei das Kabel einen Leiter umfasst, der von mindestens einer halbleitenden Schicht und einer Isolierschicht, vorzugsweise von mindestens einer inneren halbleitenden Schicht, einer Isolierschicht und optional und vorzugsweise einer äußeren halbleitenden Schicht, und zwar in dieser Reihenfolge, umgeben ist, wobei das Verfahren die folgenden Schritte umfasst:

(a) Bereitstellen von einer Zusammensetzung (A), die ein polares Copolymer (a), Ruß und optional weitere Komponenten umfasst, und Schmelzmischen von der Zusammensetzung (A), die ein polares Copolymer(a) und Ruß umfasst, vorzugsweise in Gegenwart von einer weiteren Komponente(n), besonders vorzugsweise von zumindest Zusatzstoff(en), ausgewählt aus einem Vernetzungsmittel,
(b) Bereitstellen von einer Zusammensetzung (B), die ein polares Copolymer(b2), ein geringpolares Polyolefin (b1) und optional eine weitere Komponente(n) umfasst, und Schmelzmischen von der Zusammensetzung (B), die ein polares Copolymer (b2), ein geringpolares Polyolefin (b1) und optional eine weitere Komponente(n) umfasst, vorzugsweise in Gegenwart von Zusatzstoff(n), ausgewählt aus mindestens einem Vernetzungsmittel, und
(c) Aufbringen, vorzugsweise durch Coextrusion, auf einen Leiter, von

- der Schmelzmischung der Zusammensetzung (A), die aus dem Schritt (a) erhalten wird, um eine halbleitende Schicht, vorzugsweise mindestens die innere halbleitende Schicht und optional, falls diese vorliegt, die äußere halbleitende Schicht, zu bilden, und
- der Schmelzmischung der Zusammensetzung (B), die aus dem Schritt (b) erhalten wird, um die Isolierschicht zu bilden.

**13.** Verfahren nach Anspruch 12, wobei in dem Schritt (b):

- Polymerpellets der Zusammensetzung (B), die das polare Copolymer(b2), ein geringpolares Polyolefin(b1) und optional Zusatzstoff(e) umfasst, zu einem Kabelextruder zugegeben und bei erhöhter Temperatur gemischt werden, optional zusammen mit Zusatzstoff(en), der (die) zu dem Kabelextruder vor oder während des Mischschritts zugegeben wird (werden), um die Schmelzmischung des Schritts (b) zu bilden; oder
- Polymerpellets des polaren Copolymers (b2), das optional Zusatzstoff(e) umfasst, und Polymerpellets von dem geringpolaren Polyolefin (b1), das optional Zusatzstoff(e) umfasst, getrennt oder als eine Vormischung aus den zwei Pellettypen zu einem Kabelextruder zugegeben werden und die erhaltene Mischung aus den zwei Pellettypen bei erhöhter Temperatur gemischt wird, optional zusammen mit Zusatzstoff(en), vorzugsweise mit mindestens Vernetzungsmittel(n), der (die) zu dem Kabelextruder vor oder während des Mischschritts zugegeben wird (werden), um die Schmelzmischung von der Zusammensetzung (B) des Schritts (b) zu bilden.

**14.** Verwendung von einem Kabel nach einem der Ansprüche 1 bis 11 als ein Energiekabel.

## Revendications

**1.** Câble comprenant un conducteur entouré par au moins une couche semi-conductrice et au moins une couche isolante, dans n'importe quel ordre, dans lequel

- la couche semi-conductrice se compose d'une composition (A) comprenant un copolymère polaire (a) et du noir de carbone, et
- la couche isolante se compose d'une composition (B) comprenant un copolymère polaire (b2),

dans lequel la valeur absolue de la différence entre la température de fusion $T_m(a)$ dudit copolymère polaire (a) et la température de fusion $T_m(b2)$ dudit copolymère polaire (b2) est inférieure à 25 °C,
dans lequel le copolymère polaire (a) et le copolymère polaire (b2) contiennent des groupes polaires et dans lequel la composition (B) comprend en outre une polyoléfine faiblement polaire (b1), qui contient des groupes polaires ou des groupes non polaires, la quantité des groupes polaires, si présents, dans la polyoléfine faiblement polaire (b1) étant inférieure à la quantité de groupes polaires présents dans les copolymères polaires (a) et (b2), et
dans lequel la teneur en comonomère(s) polaire(s), exprimée en millimoles (mmol) par gramme de polymère, présente dans le copolymère polaire (a) ($C_{comonomère\ polaire\ (a)}$) et dans le copolymère polaire (b2) ($C_{comonomère\ polaire\ (b2)}$) satisfait à la relation :

$$- 15\ mmol/g < C_{comonomère\ polaire}\ (a) - (C_{comonomère\ polaire}\ (b2) < 15\ mmol/g.$$

**2.** Câble selon la revendication 1, dans lequel les groupes polaires présents dans les copolymères polaires (a) et (b2), et facultativement présents dans la polyoléfine faiblement polaire (b1), proviennent du ou des comonomères polaires présents dans les copolymères polaires (a) et (b2) et facultativement présents dans la polyoléfine faiblement polaire (b1), la quantité de comonomère(s) polaire(s), si présent(s), dans la polyoléfine faiblement polaire (b1) étant inférieure à 150 micromoles par gramme de la polyoléfine faiblement polaire.

**3.** Câble selon l'une quelconque des revendications précédentes, dans lequel le copolymère polaire (a) et le copolymère polaire (b2) comprennent au moins un type identique de comonomère(s) polaire(s).

**4.** Câble selon l'une quelconque des revendications précédentes, dans lequel la quantité de comonomère(s) polaire(s) dans le copolymère polaire (a) et/ou le copolymère polaire (b2) est choisie indépendamment et est supérieure à 500 micromoles par gramme du copolymère polaire.

**5.** Câble selon l'une quelconque des revendications précédentes, le câble comprenant un conducteur entouré d'une couche semi-conductrice interne, d'une couche isolante et facultativement, et de préférence d'une couche semi-conductrice externe, dans cet ordre, au moins la couche semi-conductrice interne se composant de la composition (A) telle que définie dans la revendication 1.

**6.** Câble selon l'une quelconque des revendications précédentes, dans lequel le copolymère polaire (a) et/ou le copolymère polaire (b2) sont un copolymère d'éthylène ayant au moins un ou plusieurs comonomères polaires, le ou les comonomères polaires étant choisis parmi le ou les comonomères contenant un ou plusieurs groupes hydroxyle, un ou plusieurs groupes alkoxy, un ou plusieurs groupes carbonyle, un ou plusieurs groupes carboxyle, un ou plusieurs groupes éther ou un ou plusieurs groupes ester,

- de préférence le ou les comonomères polaires du copolymère polaire (a) sont identiques au ou aux comonomères polaires du copolymère polaire (b2) ou le ou les comonomères polaires sont choisis dans le groupe des acrylates d'alkyle, des méthacrylates d'alkyle ou de l'acétate de vinyle, plus préférablement le copolymère polaire (a) et/ou le copolymère polaire (b2) sont un copolymère d'éthylène ayant un acrylate d'alkyle en $C_1$ à $C_4$, tel que l'acrylate de méthyle, d'éthyle, de propyle ou de butyle, ou un acétate de vinyle, ou

- plus préférablement le copolymère polaire (a) est un copolymère d'une oléfine avec un acrylate de méthyle, un acrylate d'éthyle ou un acrylate de butyle ou avec un quelconque mélange de ceux-ci, plus préférablement avec un acrylate de méthyle, un acrylate d'éthyle ou un acrylate de butyle,

- plus préférablement le copolymère polaire (b2) est un copolymère d'une oléfine avec un acrylate de méthyle, un acrylate d'éthyle ou un acrylate de butyle ou avec un quelconque mélange de ceux-ci, plus préférablement avec un acrylate de méthyle, un acrylate d'éthyle ou un acrylate de butyle,

- plus préférablement le ou les comonomères polaires du copolymère polaire (a) sont identiques tout comme le ou les comonomères polaires du copolymère polaire (b2) et sont choisis parmi l'acrylate de méthyle, l'acrylate d'éthyle ou l'acrylate de butyle,

- plus préférablement, si la polyoléfine faiblement polaire (b1) est un copolymère polaire, alors il est préférable que ledit copolymère polaire comprenne le même comonomère polaire que le copolymère polaire (b2), de préférence c'est un copolymère d'une oléfine avec un acrylate de méthyle, un acrylate d'éthyle ou un acrylate de butyle ou avec un quelconque mélange de ceux-ci, plus préférablement avec un acrylate de méthyle, un acrylate d'éthyle ou un acrylate de butyle.

7.  Câble selon l'une quelconque des revendications précédentes, dans lequel la composition (A) comprend du noir de carbone en une quantité de 10 à 50 % en poids.

8.  Câble selon l'une quelconque des revendications précédentes, dans lequel la composition (A) et/ou la composition (B) contiennent un agent de réticulation.

9.  Câble selon l'une quelconque des revendications précédentes, dans lequel la polyoléfine faiblement polaire (b1) est un polymère de polyéthylène basse densité (LDPE) produit sous haute pression (HP).

10. Câble selon l'une quelconque des revendications précédentes, dans lequel la polyoléfine faiblement polaire (b1) est présente en une quantité de 30 % en poids ou plus, de préférence de 60 à 95 % en poids par rapport à la composition (B).

11. Câble selon l'une quelconque des revendications précédentes, dans lequel un câble modèle se composant de la composition (A) et de la composition (B) a une résistance à la rupture d'au moins 45 kV/mm après 1 000 heures de vieillissement à l'état humide.

12. Procédé de production d'un câble selon l'une quelconque des revendications 1 à 11, dans lequel le câble comprend un conducteur entouré par au moins une couche semi-conductrice et une couche isolante, de préférence au moins par une couche semi-conductrice interne, une couche isolante et facultativement, et de préférence, une couche semi-conductrice externe, dans cet ordre, le procédé comprenant les étapes consistant à :

(a) utiliser une composition (A) comprenant un copolymère polaire (a), du noir de carbone et facultativement d'autres composants, et mélanger à l'état fondu la composition (A) comprenant un copolymère polaire (a), du noir de carbone, de préférence en présence d'un ou plusieurs autres composants, plus préférablement d'au moins un ou plusieurs additifs choisis au moins parmi un agent de réticulation,

(b) utiliser une composition (B) comprenant un copolymère polaire (b2), une polyoléfine faiblement polaire (b1) et facultativement un ou plusieurs autres composants, et mélanger à l'état fondu la composition (B) comprenant un copolymère polaire (b2), une polyoléfine faiblement polaire (b1) et facultativement un ou plusieurs autres composants, de préférence en présence d'un ou plusieurs additifs choisis au moins parmi un agent de réticulation, et

(c) appliquer, de préférence par co-extrusion, sur un conducteur,

- le mélange à l'état fondu de la composition (A) obtenu à l'étape (a) pour former une couche semi-conductrice, de préférence au moins la couche semi-conductrice interne, et facultativement, si présente, la couche semi-conductrice externe, et
- le mélange à l'état fondu de la composition (B) obtenu à l'étape (b) pour former la couche isolante.

**13.** Procédé selon la revendication 12, dans lequel dans l'étape (b) :

- des granules polymères de la composition (B) qui comprennent le copolymère polaire (b2), une polyoléfine faiblement polaire (b1) et facultativement un ou plusieurs additifs, sont ajoutés dans une extrudeuse de câble et mélangés à une température élevée, facultativement avec un ou plusieurs additifs ajoutés à ladite extrudeuse de câble avant ou pendant l'étape de mélange, pour former le mélange à l'état fondu de l'étape (b) ; ou
- des granules polymères du copolymère polaire (b2) qui comprennent facultativement un ou plusieurs additifs, et des granules polymères de la polyoléfine faiblement polaire (b1) qui comprennent facultativement un ou plusieurs additifs sont ajoutés séparément ou sous forme de prémélange des deux types de granules dans une extrudeuse de câble et le mélange obtenu des deux types de granules est mélangé à une température élevée, facultativement avec un ou des additifs, de préférence avec au moins un ou plusieurs agents de réticulation, ajoutés à ladite extrudeuse de câble avant ou pendant l'étape de mélange, pour former le mélange à l'état fondu de la composition (B) de l'étape (b).

**14.** Utilisation d'un câble selon l'une quelconque des revendications 1 à 11 en tant que câble électrique.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 629222 A
- US 4391789 A
- US 3922335 A
- US 3401020 A
- US 4340577 A

- EP 688794 A
- EP 949274 A
- WO 9512622 A
- WO 0034341 A

**Non-patent literature cited in the description**

- **S. BERGER ; S. BRAUN.** 200 and More NMR Experiments: A Practical Course. Wiley-VCH, 2004
- **LAND H.G. ; SCHÄDLICH H.** Model Cable Test for Evaluating the Ageing Behaviour under Water Influence of Compounds for Medium Voltage Cables. *Conference Proceedings of Jicable,* 24 June 1991, vol. 91

- **U.H. NILSSON.** The Use of Model Cables for Evaluation of the Electrical Performance of Polymeric Power Cable Materials. *Conference Proceedings of NORD-IS,* 13 June 2005